# EUROPÄISCHE PATENTSCHRIFT

(11) **EP 1 394 226 B1**
(45) Veröffentlichungstag und Bekanntmachung des Hinweises auf die Patenterteilung: **11.01.2006**
(21) Anmeldenummer: 03013085.0
(22) Anmeldetag: 11.06.2003
(51) Int. Cl.: C09D 11/00

(54) **Wässrige, kolloidale, gefrier- und lagerstabile Gasrusssuspension**
Aqueous, colloidal, storage and freezing stable gas black suspension
Suspension aqueuse du noir de fumée, stable au stockage et à la congelation

(30) Priorität: 31.07.2002 DE 10235027
(43) Veröffentlichungstag der Anmeldung: 03.03.2004
(73) Patentinhaber: Degussa AG, 40474 Düsseldorf (DE)
(72) Erfinder: Zoch, Heinz, Dr., 63477 Maintal (DE); Kalbitz, Werner, 63517 Rodenbach (DE); Lüdtke, Stephan, 63477 Maintal (DE); Lüthge, Thomas, Dr., 44139 Dortmund (DE); Tauber, Gerd, 63500 Seligenstadt (DE)

(56) Entgegenhaltungen:
- EP-A- 0 959 093
- EP-A- 1 038 930
- EP-A- 1 099 735
- PATENT ABSTRACTS OF JAPAN vol. 015, no. 211 (C-0836), 29. Mai 1991 (1991-05-29) & JP 03 062864 A (PENTEL KK), 18. März 1991 (1991-03-18)

## Beschreibung

Die Erfindung betrifft eine wäßrige, kolloidale, gefrier- und lagerstabile Gasrußsuspension, ein Verfahren zu deren Herstellung sowie deren Verwendung.

Wäßrige, kolloidale Rußsuspensionen werden zur Herstellung von Lacken, Druckfarben oder auch direkt als Tinten, zum Beispiel bei Tintenstrahldruckern (Ink-Jet), eingesetzt.

Es ist bekannt, Pigmentruße in Ink-Jet-Tinten zu verwenden (US-A 5,085,698, US-A 5,320 668). Darin werden unter anderem wasserlösliche Acrylate zur Pigmentstabilisierung eingesetzt.

Es sind ferner wäßrige Rußsuspensionen mit Rußen, deren mittlere Primärteilchengröße nicht größer als 30 nm und deren DBP-Zahl mindestens 75 ml/100 g beträgt, bekannt (US-A 5, 538, 598) .

Es ist weiterhin bekannt, wäßrige Rußsuspensionen unter Verwendung von wasserlöslichen organischen Lösungsmitteln und wasserlöslichen Acrylharzen herzustellen (US-A 5,609,671).

Nachteil der bekannten Rußsuspensionen ist die Notwendigkeit, neben dem eigentlichen Netzmittel zur Stabilisierung des Pigments, weitere Zusatzstoffe zur Verbesserung der anwendungstechnischen Eigenschaften, wie Dispergiergrad, Lagerstabilität bei Raumtemperatur, Gefrierstabilität, optische Dichte, Viskosität, Zeta-Potential und Teilchengrößenverteilung, den Suspensionen zuzugeben.

Durch die Zugabe des Netzmittels und der Zusatzstoffe ist die Flexibilität der Verwendung der Suspension eingeschränkt. Die Gefahr von Unverträglichkeiten in der entsprechenden Endformulierung steigt an, und es wird notwendig, spezielle Suspensionen für spezielle Anwendungen zu entwickeln.

Ein weiterer Nachteil der Zugabe des Netzmittels und der Zusatzstoffe, bei denen es sich in der Regel um lösliche, beziehungsweise mischbare organische Stoffe handelt, ist deren toxisches, beziehungsweise ökotoxisches Potential. Insbesondere relativ leicht flüchtige Verbindungen bergen die Gefahr der inhalativen Aufnahme bei der Anwendung.

Aufgabe der vorliegenden Erfindung ist es, eine wäßrige Gasrußsuspension zur Verfügung zu stellen, die keine Zusatzstoffe benötigt, um die gewünschten anwendungstechnischen Eigenschaften, wie beispielsweise Dispergiergrad, Lagerstabilität, Gefrierstabilität, optische Dichte, Viskosität, Zeta-Potential und Teilchengrößenverteilung, einzustellen.

Gegenstand der Erfindung ist eine wäßrige, kolloidale, gefrier- und lagerstabile Gasrußsuspension, welche dadurch gekennzeichnet ist, dass diese aus 2 - 30 Gew.-%, vorzugsweise 10 - 25 Gew.-%, Gasruß, 0 - 40 Gew.-%, vorzugswei e 0 - 30 Gew.-%, Ruß, einem dispergierunterstützenden Additiv, welches ein Styrol-Acrylsäure Copolymer ist, einem Biozid und Wasser besteht, und das Zetapotential kleiner -10 mV, vorzugsweise kleiner -25 mV, die Oberflächenspannung größer 50 mN/m, vorzugsweise größer 60 mN/m, und die mittlere Teilchengröße kleiner 200 nm, vorzugsweise kleiner 100 nm, ist.

Kolloidal bedeutet die gleichmäßige Verteilung von Teilchen mit Durchmesser von 10 nm - 10 µm in einem Suspensionsmittel. Für die Verwendung in Tinten ist eine niedrige Viskosität je nach Druckverfahren vorteilhaft, um die gewünschten Druckeigenschaften, beispielsweise Druckschärfe, zu erhalten. Ein niedriges Zetapotential, das den Ladungszustand der Teilchen in der Rußsuspension beschreibt, ist eine Meßgröße für die gute Suspensionsstabilität. Eine hohe Oberflächenspannung beeinflußt, beispielsweise beim Inkjet-Verfahren positiv die Tröpfchenbildung. Ein hoher Dispergiergrad ist von wesentlicher Bedeutung für eine gute Lagerstabilität, für gute koloristische Eigenschaften in der Anwendung und zur Verhinderung von Düsenverstopfungen speziell beim Inkjet-Verfahren.

Der pH-Wert der wäßrigen, kolloidalen Gasrußsuspension kann 6 - 12, vorzugsweise 8 - 10, betragen.

Der Gasruß kann eine Primärteilchengröße von 8 - 40 nm und einen DBP-Wert von 40 - 200 ml/100g aufweisen. Der Gasruß kann auch eine Mischung von verschiedenen Gasrußen sein. Als Gasruße können beispielsweise Farbruß FW 200, Farbruß FW 2, Farbruß FW 2 V, Farbruß FW 1, Farbruß FW 18, Farbruß S 170, Farbruß S 160, Spezialruß 6, Spezialruß 5, Spezialruß 4, Spezialruß 4A, NIPex 150, NIPex 160 IQ, NIPex 170 IQ, NIPex 180 IQ, Printex U, Printex V, Printex 140 U oder Printex 140 V der Firma Degussa AG verwendet werden.

Als Ruß können Pigmentruße mit einer mittleren Primärteilchengröße von 8 bis 80 nm, vorzugsweise 10 bis 45 nm, und einer DBP-Zahl von 40 bis 200 ml/100g, vorzugsweise 60 bis 150 ml/100g, eingesetzt werden. Als Ruße können weiterhin Pigmentruße, die mittels Furnace-, Channel- oder Flammrußverfahren hergestellt werden, eingesetzt werden. Beispiele hierfür sind Printex 95, Printex 90, Printex 85, Printex 80, Printex 75, Printex 55, Printex 45, Printex 40, Printex P, Printex 60, Printex XE 2, Printex L 6, Printex L, Printex 300, Printex 30, Printex 3, Printex 35, Printex 25, Printex 200, Printex A, Printex G, Spezialruß 550, Spezialruß 350, Spezialruß 250, Spezialruß 100, Flammruß 101, NIPex 35, NIPex 60, NIPex 70 oder NIPex 90.

Das Biozid kann in Mengen von 0,01 -1,0 Gew.-% zugesetzt werden. Als Biozid können Isothiazolinon-Derivate, Formaldehydabspalter oder Kombinationsprodukte beider Produktklassen verwendet werden. Beispielsweise können als Biozid Parmetol der Firma Schülke & Mayr, Ebotec der Firma Bode Chemie, Acticide der Firma Thor Chemie oder Proxel der Firma Zeneca eingesetzt werden.

Das dispergierunterstützende Additiv kann in Mengen von 1 - 50 Gew.-%, vorzugsweise 3 - 20 Gew.-%, bezogen auf die Gesamtsuspension zugesetzt werden. Das Molekulargewicht des dispergierunterstützenden Additivs kann 1000 bis 20000 g/mol, vorzugsweise 14500 bis 17000 g/mol, sein. Die Säurezahl des dispergierunterstützenden Additivs kann 120 bis 320, vorzugsweise 180 bis 280, sein. Als dispergierunterstützendes Additiv wird Styrol-Acrylsäure Copolymere verwendet. Die Copolymere können statistische, alternierende, Block- oder Pfropfcopolymere sein. Beispielsweise kann als dispergierunterstützendes Additiv Joncryl 678, Joncryl 680, Joncryl 682 oder Joncryl 690 der Firma Johnson Polymer B.V. verwendet werden.

In einer bevorzugten Ausführungsform können als dispergierunterstützendes Additiv vollständig Ammonium-oder Alkalihydroxid -neutralisierte Formen, insbesondere NaOH neutralisierte Formen, der Styrol-Acrylsäure Copolymere verwendet werden.

Andere Typen von dispergierunterstützenden Additiven eignen sich nicht zur Herstellung der erfindungsgemäßen Gasrußsuspension, wie an bestimmten Eigenschaften, beispielsweise dem Dispergiergrad, Oberflächenspannung, Lagerstabilität oder Gefrierstabilität, deutlich sichtbar wird.

Durch die Einhaltung bestimmter Grenzwerte von typischen Suspensionskennzahlen, wie Gasrußanteil, Zetapotential, pH-Wert, Oberflächenspannung und mittlere Teilchengröße kann eine wäßrige, kolloidale Gasrußsuspension die gefrier- und lagerstabil ist erhalten werden.

Ein weiterer Gegenstand der Erfindung ist ein Verfahren zur Herstellung der erfindungsgemäßen wäßrigen, kolloidalen, gefrier- und lagerstabilen Gasrußsuspension, welches dadurch gekennzeichnet ist, daß man den Gasruß und gegebenenfalls den Ruß gemeinsam mit dem dispergierunterstützenden Additiv und Biozid in Wasser dispergiert.

Die Dispergierung kann man mit Perlmühlen, Ultraschall-Geräten, Hochdruckhomogenisatoren, Microfluidizer, Ultra-Turrax oder vergleichbaren Aggregaten durchführen. Im Anschluß an die Dispergierung kann die wäßrige, kolloidale, gefrier- und lagerstabile Rußsuspension durch Zentrifugieren und/oder Filtrieren gereinigt werden.

Ein weiterer Gegenstand der Erfindung ist die Verwendung der erfindungsgemäßen wäßrigen, kolloidalen, gefrier- und lagerstabilen Gasrußsuspension in Tinten, Ink Jet Tinten, Lacken und Druckfarben.

Bei der Verwendung der erfindungsgemäßen wäßrigen, kolloidalen, gefrier- und lagerstabilen Gasrußsuspension kann auf die Zugabe von weiteren Zusatzstoffen für die unterschiedlichen Anwendungen zur Verbesserung der Suspensionseigenschaften verzichtet werden.

Eine weiterer Gegenstand dieser Erfindung ist eine Tinte, welche dadurch gekennzeichnet ist, daß diese die erfindungsgemäße wäßrige, kolloidale, gefrier- und lagerstabile Gasrußsuspension enthält.

Die Vorteile der erfindungsgemäßen Gasrußsuspensionen sind die guten Lager- und Gefrierstabilitäten, hoher Dispergiergrad und optische Dichte und niedrige Teilchengröße, Viskosität und Zeta-Potential, ohne dass Zusatzstoffe zugegeben werden müssen.

Durch die Vermeidung von Zusatzstoffen werden keine organischen, löslichen Stoffe freigesetzt, die entsprechendes toxisches beziehungsweise ökotoxisches Potential besitzen.

Ein weiterer Vorteil der erfindungsgemäßen wäßrigen, kolloidalen, gefrier- und lagerstabilen Gasrußsuspension ist, daß bei Zugabe von organischen Lösungsmitteln keine Neigung zur Agglomerisation besteht.

### Beispiele:

### Beispiel 1: Vergleich Gasruß - Furnaceruß

Die für die Rußsuspension verwendete Rezeptur ist in Tabelle 1 angegeben.

**Tabelle 1**

| | Referenzsuspension 1 | Referenzsuspension 2 | Erfindungsgemäße Gasrußsuspension 1 |
|---|---|---|---|
| Gasruß NIPex 160 IQ | - | - | 15 Gew.-% |
| Furnaceruß Printex 95 | 30 Gew.-% | - | - |
| Furnaceruß Printex 90 | - | 15 Gew.-% | - |
| Joncryl 690 (35%ige Harzlösung) | 30 Gew.-% | 15 Gew.-% | 15 Gew.-% |
| Biozid Acticide MBS | 0,3 Gew.-% | 0,3 Gew.-% | 0,3 Gew.-% |
| Wasser | 39,7 Gew.-% | 69,7 Gew.-% | 69,7 Gew.-% |

Joncryl 690 ist ein Styrol-Acrylsäure Copolymer der Firma Johnson Polymer B.V.. Das Biozid Acticide MBS ist ein Kombinationsprodukt aus Methyl-4-isothiazolin-3-on und 1,2-Benzisothiazolin-3-on der Firma Thor Chemie. Die Furnaceruße Printex 95 (BET-Oberfläche 250 m²/g, DBP 52 ml/100g) und Furnaceruße Printex 90 (BET-Oberfläche 300 m²/g, DBP 100 ml/100g) sind Ruße der Firma Degussa AG. Bei dem Gasruß NIPex 160 IQ handelt es sich um einen Ruß mit einer BET-Oberfläche von 150 m²/g und einer mittleren Primärteilchengröße von 20 nm der Firma Degussa AG.

Die Rußsuspensionen werden wie folgt hergestellt:
1. Vorbereitung des dispergierunterstützenden Additivs
   Das Wasser und die Menge an Styrol - Acrylsäure - Copolymer werden vorgelegt und unter Rühren vorsichtig 33 % NaOH - Lösung zugetropft bis ein pH - Wert von 9 erreicht ist.
2. Einarbeiten des Rußes
   Der Ruß wird in die vorbereitete dispergierunterstützende Additivlösung unter langsamem Rühren (entweder von Hand oder mit langsamem Rührwerk) nach und nach eingearbeitet.
3. Dispergierung
   Die in Punkt 2 vorbereitete Suspension wird mit dem Ultraschall-Gerät dispergiert. In der Zentrifuge können sehr grobe Teilchen von der so erhaltenen Suspension abgetrennt werden.

### Lichtmikroskopische Untersuchung des Dispergiergrades:

Der Dispergiergrad der Rußsuspensionsproben wird bei 400 facher Vergrößerung beurteilt. Anhand der Skalierung am Mikroskop können bei dieser Einstellung Grobpartikel > 1 µm gut erkannt werden.

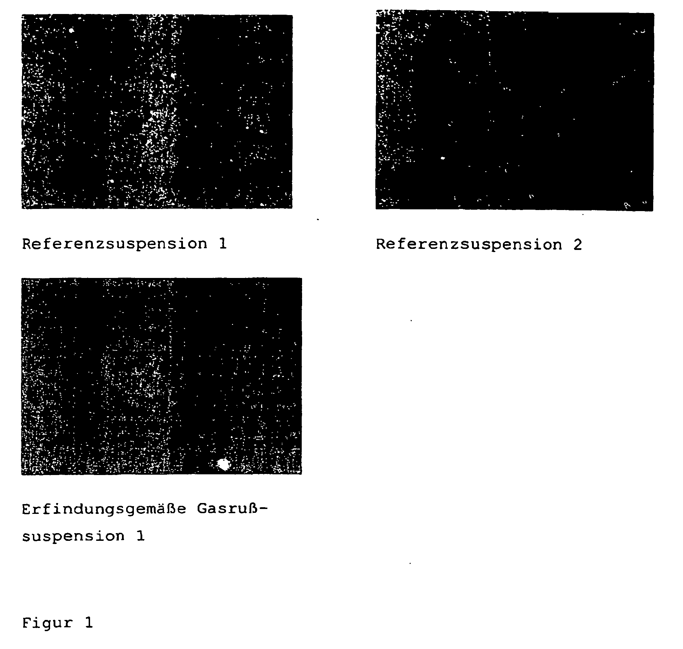

In Figur 1 sind Mikroskopieaufnahmen der Rußsuspensionen abgebildet.

Die erfindungsgemäße Gasrußsuspension zeigt einen deutlich höheren Dispergiergrad als die Referenzsuspensionen mit den Furnacerußen. Auch ohne Zusatzstoffe zeigt die erfindungsgemäße Gasrußsuspension sehr hohe Dispergiergrade.

### Beispiel 2: Vergleich der dispergierunterstützenden Additive

Die für die Rußsuspension verwendete Rezeptur ist in Tabelle 2 angegeben.

**Tabelle 2**

| | Referenzsuspension 3 | Referenzsuspension 4 | Referenzsuspension 5 | Erfindunggemäße Gasrususpension 2 |
|---|---|---|---|---|
| Gasruß FW 18 | 15 Gew.-% | 15 Gew.-% | 15 Gew.-% | - |
| Gasruß NIPex 160 IQ | - | - | - | 15 Gew.-% |
| Joncryl 690 (35 %ige Harzlösung) | - | - | - | 15 Gew.-% |
| MSA-CP | 10 Gew.-% | - | - | - |
| PVP | - | 8 Gew.-% | - | - |
| Fettalkohol glykolether sulfat | - | - | 10 Gew.-% | - |
| AMP 90 | 0,3 Gew.-% | 0,2 Gew.-% | 0,2 Gew.-% | - |
| Biozid Acticide MBS | 0,3 Gew.-% | 0,3 Gew.-% | 0,3 Gew.-% | 0,3 Gew.-% |
| Wasser | 74,4 Gew.-% | 76,5 Gew.-% | 74,5 Gew.-% | 69,7 Gew.-% |

PVP ist Polyvinylpyrolidon der Firma GAF. MSA-CP ist Tego Dispers 750 W, ein Styrol-Maleinsäureanhydrid-Copolymer der Firma Tego. Fettalkoholglykolethersulfat ist Disponil FES 3215 der Fa. Cognis. AMP 90 ist 2-Amino-2-methyl-1-propanol-Lösung der Firma Angus Chemie.

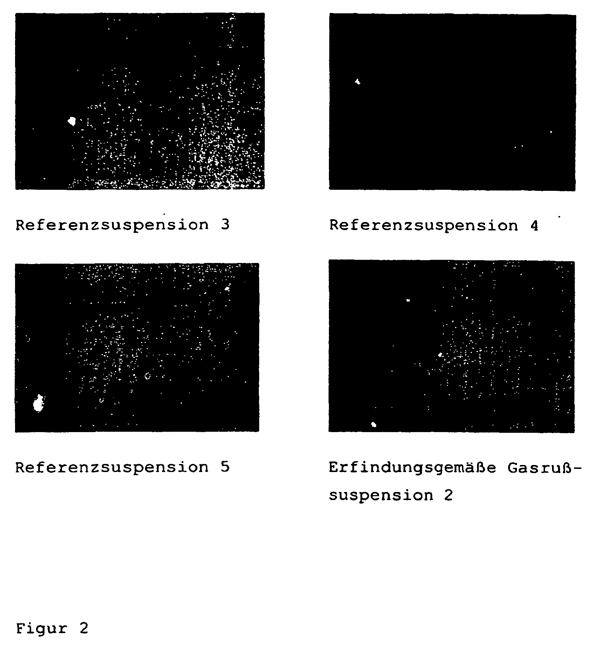

Die Referenzmischung 5 zeigt einen schlechteren Dispergiergrad als die erfindungsgemäße Gasrußsuspension (Figur 2).

In Tabelle 3 sind verschiedene Suspensionseigenschaften zusammengefaßt.

**Tabelle 3**

| | Anforderungen | Referenzsuspension 3 | Referenzsuspension 4 | Referenzsuspension 5 | Erfindungsgemäße Gasrußsuspension 2 |
|---|---|---|---|---|---|
| Herstellbarkeit einer 15% % Gasrußsuspension | ja | + | + | + | + |
| Dispergiergrad (Lichtmikroskop) | keine Partikel > 1 µm | + | + | - | ++ |
| mittlere Partikelgröße [nm] | < 100 nm | - (125) | + (89) | + (88) | + (92) |
| Gefrierstabilität | ja | - | + | + | + |
| Oberflächenspannung [mN/m] | > 60 mN/m | - (50,1) | ++ (63) | - (38) | ++ (65) |
| pH-Wert | 8-9 | + (8, 9) | + (8, 7) | + (8, 8) | +(8,6) |
| Viskosität [mPas] | < 15 mPas | + (11,1) | - (17,0) | ++ (5,7) | ++ (8,2) |
| Zetapotential [mV] | < -20 mV | - (-7) | - (-5) | - (-15) | ++ (-31) |
| Lagerstabilität 50 °C, 35 d | ja (keine Sedimentation und Reagglomeration, sowie kein Viskositätsanstieg) | - (starker Viskosität sanstieg) | + | + | + |

| | | | | | |
|---|---|---|---|---|---|
| - = erfüllt nicht die Anforderungen + = erfüllt die Anforderungen ++ = übertrifft bei weitem die Anforderungen | | | | | |

### Bestimmung der Viskosität:

Das rheologische Verhalten wird in einem Rotationsversuch mit Schergeschwindigkeitsvorgabe (CSR) mit einem Physica Rheometer USD 200 erfaßt. Bei einer Schergeschwindigkeit von 1000 s⁻¹ wird der Viskositätswert abgelesen.

### Bestimmung der mittleren Partikelgröße:

Die Partikelgrößenverteilung wird mit einem Photonenkorrelationspektrometer (PCS), Typ Horiba LB-500, ermittelt und als mittlere Partikelgröße der angezeigte "median - Wert" abgelesen. Die Messung erfolgt an einer unverdünnten Suspensionsprobe.

### Bestimmung der Oberflächenspannung:

Mit dem Blasentensiometer BP2 der Firma Krüss wird die dynamische Oberflächenspannung ermittelt. Der Endwert wird bei 3000 ms abgelesen.

### Lagerstabilitätsprüfung bei 50 °C über 28 Tage:

Die Proben werden bei 50 °C im Trockenschrank für 28 Tage gelagert. Die Viskosität und Sedimentationsneigung werden überprüft.
Je 300 ml Suspensionsprobe wird für 28 Tage bei 50 °C im Trockenschrank in einer geschlossenen Glasflasche gelagert. Die Sedimentbildung am Boden wird mit einem Spatel überprüft und die Viskosität mit einem Brookfield Viskosimeter DV II plus gemessen. Zusätzlich wird die Sedimentbildung an einigen Proben bei Lagerung bei Raumtemperatur untersucht.

### Gefrierstabilitätsprüfung:

Die Proben werden eingefroren und nach dem Auftauen der Dispergiergrad mittels Lichtmikroskop überprüft.
Eine Probe wird als gefrierstabil beurteilt, wenn die eingefrorene Probe nach Auftauen wieder eine dünnflüssige Konsistenz hat, kein Sediment bildet und unter dem Lichtmikroskop keine Reagglomerationen sichtbar sind.

Insbesondere die erfindungsgemäße kolloidale Gasrußsuspensionen erfüllt alle Anforderungen an eine optimale Suspension.

Aus den Rußsuspensionsproben werden mit 2-Pyrrolidon, 1,3-Propandiol, Glyzerin und deionisiertes Wasser Tinten mit 5% Rußanteil hergestellt. Dazu wird die Vormischung an Tintenadditiven vorgelegt und unter Rühren die Rußsuspension vorsichtig zugegeben. Die fertige Tinte wird mit einer Filterfeinheit von 500 nm filtriert. Danach werden 6 pm - Draw Downs mit dem Aufstrichgerät K Control Coater auf Kopierpapier (Typ: Kompass Copy Office) hergestellt und nach 24 h die optische Dichte mit einem Densitometer bestimmt.

Die Druckversuche werden mit einem Canon Office Drucker BJC-S450 durchgeführt. Dazu wird die Tinte vorab unter Vakuum entlüftet und in eine gereinigte Original - Druckerpatrone eingefüllt.

In Tabelle 4 sind die Ergebnisse dargestellt.

**Tabelle 4**

| | Referenzsuspension 3 | Referenzsuspension 4 | Referenzsuspension 5 | Erfindungsgemäße Gasrußsuspension 2 |
|---|---|---|---|---|
| Lichtmikroskop | o | o | o | + |
| pH - Wert | 8,6 | 8,7 | 8,6 | 8,7 |
| Viskosität, 23 °C [mPas] | 3,4 | 3,7 | 2,9 | 3,1 |
| Oberflächenspannung [mN/m] | 47 | n.b. | n.b. | 46 |
| optische Dichte (OD) auf Kopierpapier Kompass Copy Office | 1,39 | 1,34 | 1,26 (fleckig) | 1,41 |
| OD auf Ink Jet Papier HP 51634 Z | 1,49 | 1,43 | 1,58 | 1,51 |
| OD auf Ink Jet Papier Canon HR-101 | 1,53 | 1,54 | 1,58 | 1,60 |
| OD auf Ink Jet Papier Epson 720 dpi | 1,51 | 1,53 | 1,58 | 1,56 |
| Andruck nach Druckpause 5 min | -** | -** | + | + |
| Andruck nach Druckpause 10 min | -** | -** | + | + |
| Andruck nach Druckpause 20 min. | -** | -** | + | + |
| Andruck nach Druckpause 30 min. | -** | -** | + | + |
| Andruck nach Druckpause 60 min. | -** | -** | + | + |
| Düsenverstopfungen | ja | ja | keine | keine |
| Antrocknungen am Druckkopf | ja | ja | keine | keine |
| Andruck nach Druckpause 1 Tag | n.b. | n.b. | + | + |
| Andruck nach Druckpause 7 Tage | n.b. | n.b. | + | + |
| Gesamturteil Druckbild | - | - | o | + |

| | | | | |
|---|---|---|---|---|
| + = gut; o = ausreichend; - = schlecht; ** Anschreibprobleme | | | | |

### Bestimmung des pH - Wertes:

Der pH - Wert wird an der unverdünnten Suspension bestimmt.

### Folgende Drucktests werden durchgeführt:

a. Druck einer Seite auf Kopierpapier und auf verschiedenen, marktüblichen Ink Jet Papieren zur Bestimmung der optischen Dichte und visuellen Beurteilung der Druckqualität.
b. Druck einer Seite nach Druckpausen von 5, 10, 20, 30 und 60 Minuten zur Beurteilung des Anschreib- beziehungsweise Antrocknungsverhaltens der Tinte.
c. Refire-Tests nach 1 und 7 Tagen Druckpause.

Die erfindungsgemäße Tinte zeichnet sich durch sehr gute Verdruckbarkeit, hohe optische Dichten und sehr gute Lagerfähigkeit aus.

## Patentansprüche

1. Wäßrige, kolloidale, gefrier- und lagerstabile Gasrußsuspension, **dadurch gekennzeichnet, dass** diese aus 2 - 30 Gew.-% Gasruß, 0 - 40 Gew.-% Ruß, einem dispergierunterstützenden Additiv, welches ein Styrol-Acrylsäure Copolymer ist, einem Biozid und Wasser besteht, und das Zetapotential kleiner -10 mV, die Oberflächenspannung größer 50 mN/m und die mittlere Teilchengröße kleiner 200 nm ist.

2. Wäßrige, kolloidale, gefrier- und lagerstabile Gasrußsuspension nach Anspruch 1, **dadurch gekennzeichnet, daß** das Styrol-Acrylsäure Copolymer vollständig mit Ammonium- oder Alkalihydroxid neutralisiert ist.

3. Verfahren zur Herstellung der wäßrigen, kolloidalen, gefrier- und lagerstabilen Gasrußsuspension nach Anspruch 1, **dadurch gekennzeichnet, daß** man den Gasruß und gegebenenfalls den Ruß gemeinsam mit dem dispergierunterstützenden Additiv und Biozid in Wasser dispergiert.

4. Verfahren zur Herstellung der wäßrigen, kolloidalen, gefrier- und lagerstabilen Gasrußsuspension nach Anspruch 3, **dadurch gekennzeichnet, daß** man die Dispergierung mit Perlmühlen, Ultraschall-Geräten, Hochdruckhomogenisatoren, Microfluidizer, Ultra-Turrax oder vergleichbaren Aggregaten durchführt.

5. Verwendung der wäßrigen, kolloidalen, gefrier- und lagerstabile Gasrußsuspension nach Anspruch 1 in Tinten, Ink Jet Tinten, Lacken und Druckfarben.

6. Tinte, **dadurch gekennzeichnet, daß** diese die wäßrige, kolloidale, gefrier- und lagerstabile Gasrußsuspension nach Anspruch 1 enthält.

## Claims

1. Aqueous, colloidal, freeze-resistant and storage-stable gas black suspension, **characterised in that** it consists of 2 - 30 wt.% gas black, 0 - 40 wt.% carbon black, a dispersion-supporting additive which is a styrene-acrylic acid copolymer, a biocide and water, and the zeta potential is less than -10 mV, the surface tension is greater than 50 mN/m and the average particle size is less than 200 nm.

2. Aqueous, colloidal, freeze-resistant and storage-stable gas black suspension according to claim 1, **characterised in that** the styrene-acrylic acid copolymer is completely neutralised with ammonium or alkali hydroxide.

3. Process for producing the aqueous, colloidal, freeze-resistant and storage-stable gas black suspension according to claim 1, **characterised in that** the gas black and optionally the carbon black are dispersed in water together with the dispersion-supporting additive and biocide.

4. Process for producing the aqueous, colloidal, freeze-resistant and storage-stable gas black suspension according to claim 3, **characterised in that** dispersion is performed with bead mills, ultrasonic devices, high-pressure homogenisers, a Microfluidizer, Ultra-Turrax or comparable equipment.

5. Use of the aqueous, colloidal, freeze-resistant and storage-stable gas black suspension according to claim 1 in inks, inkjet inks, lacquers and printing inks.

6. Ink, **characterised in that** it contains the aqueous, colloidal, freeze-resistant and storage-stable gas black suspension according to claim 1.

## Revendications

1. Suspension aqueuse colloïdale de noir de fumée de gaz stable à la congélation et à la conservation,
**caractérisée en ce qu'**
elle se compose de 2 à 30 % en poids de noir de gaz, 0 à 40 % en poids de noir de fumée, d'un additif renforçant la dispersion et qui est un copolymère de styrène et d'acide acrylique, d'un agent biocide et d'eau, et le potentiel zêta est inférieur à - 10 mV, la tension superficielle supérieure à 50 mN/m et la taille particulaire moyenne inférieure à 200 nm.

2. Suspension aqueuse colloïdale de noir de fumée de gaz stable à la congélation et à la conservation selon la revendication 1,
**caractérisée en ce que**
le copolymère de styrène et d'acide acrylique est entièrement neutralisé avec de l'hydroxyde d'ammonium ou de métal alcalin.

3. Procédé de production d'une suspension aqueuse colloïdale de noir de fumée gazeux stable à la congélation et à la conservation selon la revendication 1.
**caractérisé en ce qu'**
on disperse le noir de fumée de gaz et le cas échéant le noir de fumée avec l'additif renforçant la dispersion et l'agent biocide dans l'eau.

4. Procédé de production de la suspension aqueuse colloïdale de noir de fumée de gaz stable à la congélation et à la conservation selon la revendication 3,
**caractérisée en ce qu'**
on procède à la dispersion avec des broyeurs à perles, des appareils à ultrasons, des homogénéisateurs haute pression, des appareils de microfluidisation, des appareils Ultra-Turrax ou des appareils comparables.

5. Utilisation de la suspension aqueuse colloïdale de noir de fumée de gaz stable à la congélation et à la conservation selon la revendication 1 dans des encres, des encres pour imprimantes à jet d'encre, des vernis et des encres d'imprimerie.

6. Encre,
**caractérisée en ce qu'**
elle contient une suspension aqueuse colloïdale de noir de fumée de gaz stable à la congélation et à la conservation selon la revendication 1.
